Europäisches Patentamt

European Patent Office

Office européen des brevets

(11) Veröffentlichungsnummer: **0 024 289**
**A1**

(12) **EUROPÄISCHE PATENTANMELDUNG**

(21) Anmeldenummer: **80103749.0**

(22) Anmeldetag: **02.07.80**

(51) Int. Cl.³: **B 01 D 39/16**
// B32B5/18

(30) Priorität: **06.07.79 DE 2927287**

(43) Veröffentlichungstag der Anmeldung: **04.03.81**
**Patentblatt 81/9**

(84) Benannte Vertragsstaaten: **AT BE CH FR GB IT LI NL SE**

(71) Anmelder: **HELSA-WERKE Helmut Sandler u. Co.,**
**Bayreuther Strasse 3-4, D-8586 Gefrees (DE)**

(72) Erfinder: **Rupprecht, Michael, Ing.(Grad.),**
**Freiherr-vom-Stein-Strasse 11, D-8586 Gefrees (DE)**

(74) Vertreter: **LOUIS, PÖHLAU, LOHRENTZ & SEGETH,**
**Kesslerplatz 1, D-8500 Nürnberg (DE)**

(54) **Mehrlagiges Filtermaterial mit mindestens einer Lage eines offenporigen Schaumstoffes.**

(57) Es wird ein mehrlagiges Filtermaterial vorgeschlagen, welches wenigstens eine Lage (1, 1', 1'', 2, 2', 2'') eines offenporigen Schaumstoffes aufweist.

Um bei einem derartigen Material eine ausreichend hohe Luftdurchlässigkeit zu erreichen, gleichzeitig aber zu vermeiden, daß durchgehende Großporen bzw. Lunker auftreten, wird vorgeschlagen, die eine Lage (1, 1', 1'') mit einer mit ihr fest verbundenen weiteren Lage (2, 2', 2'') eines offenporigen Schaumstoffes zumindest einseitig abzudecken.

Besonders günstig ist es, wenn eine vergleichsweise dünne Schaumstofflage (2, 2', 2'') kleiner Porengröße mit einer weiteren, ihr gegenüber größeren Dicke und größere Poren aufweisenden Schaumstofflage (1, 1', 1'') verbunden ist.

ACTORUM AG

- 1 -

## Mehrlagiges Filtermaterial mit mindestens einer Lage eines offenporigen Schaumstoffes

Die Erfindung betrifft ein mehrlagiges Filtermaterial, welches wenigstens eine Lage eines offenporigen Schaumstoffes aufweist. Das Filtermaterial nach der Erfindung ist insbesondere zur Verwendung bei der Herstellung von Schutzanzügen geeignet, kann jedoch für andere Zwecke, wobei eine entsprechende Filterung gewünscht wird, ebenfalls eingesetzt werden.

Es gibt etliche mehrlagige Filtermaterialien, bei denen eine Lage von einem offenporigen Schaumstoff gebildet ist. Ein derartiges Filtermaterial ist beispielsweise in der DE-AS 28 04 154 beschrieben. Bei diesen Filtermaterialien muß der Schaumstoff eine ausreichende Luftdurchlässigkeit besitzen. Andererseits sollte er jedoch nach Möglichkeit so beschaffen sein, daß auf ihn auftreffende Verunreinigungen in Form von Fremdkörpern o. dgl. in den Poren zurückgehalten werden. Um eine möglichst hohe Luftdurch-

- 2 -

lässigkeit zu erzielen, ist man bestrebt, die Poren groß zu halten. In diesem Fall besteht jedoch in erhöhtem Maße die Gefahr der Bildung von Großporen bzw. Lunkern, was dazu führen kann, daß beim Schneiden des Schaumstoffes zu der dünnen Folie Poren auftreten, welche von einer Seite der Folie zur anderen durchgehen. An dieser Stelle werden dann die Schadstoffe nicht mehr einwandfrei zurückgehalten.

Der Erfindung liegt nun die Aufgabe zugrunde, ein mehrlagiges Filtermaterial mit wenigstens einer Lage eines offenporigen Schaumstoffes vorzuschlagen, welches einerseits eine ausreichend hohe Luftdurchlässigkeit besitzt, andererseits jedoch so ausgebildet ist, daß durchgehende Großporen bzw. Lunker praktisch nicht mehr auftreten können.

Zur Lösung dieser Aufgabe wird nach der Erfindung vorgeschlagen, das Filtermaterial der eingangs erwähnten Art so auszubilden, daß die eine Lage des Schaumstoffes mit einer mit dieser Lage fest verbundenen weiteren Lage eines offenporigen Schaumstoffes zumindest einseitig abgedeckt ist, wobei die Schaumstoff-Lagen vorteilhafterweise zusammenbondiert, d.h. unter Wärmeeinwirkung miteinander verbunden sind.

Bei der Erfindung wird also von der Überlegung ausgegangen, anstelle der bisher benutzten einzigen Schaumstoff-Lage zwei miteinander verbundene Schaumstoff-Schichten vorzusehen. Bei einem derartigen Vorgehen ist es praktisch ausgeschlossen, daß geradlinig durchgehende, die beiden Oberflächen des Filtermaterials verbindende Kanäle infolge des Vorhandenseins von Großporen bzw. Lunkern entstehen. Dieser Fall könnte ja nur auftreten, wenn bei den aufeinander festgelegten Schaumstoff-Lagen eine Großpore genau an der gleichen Stelle vorhanden wäre. Die Wahrscheinlichkeit hierfür ist, was leicht einleuchtet, vernachlässigbar. Durch die Verbindung der beiden Schaumstofflagen wird die Luftdurchlässigkeit grundsätzlich kaum vermindert, so daß man bei einem Vorgehen nach der Erfindung ein Filtermaterial erhält, welches gegenüber den bekannten Filtermaterialien nahezu die gleiche Luftdurchlässigkeit aufweist, andererseits jedoch durch die Versetzung der Poren bei den beiden Lagen ein gegenüber den bekannten Materialien erheblich verbessertes Rückhaltevermögen für Schadstoffe besitzt. Dies ist vermutlich mit darauf zurückzuführen, daß die Grenzfläche zwischen den beiden Schaumstofflagen im wesentlichen quer zur Haupt-Gasströmungsrichtung verlaufende Oberflächen bildet, an denen Schadstoffe leichter haften bleiben als an Oberflächen, die im wesentlichen parallel zur Strömungsrichtung angeordnet sind. Die Grenzfläche bzw. plötzliche Versetzung der Poren in diesem Bereich kann auch zu einer die Wirksamkeit des Filtermaterials verbessernden Verwirbelung des Gases und der mitgeführten Schadstoffe führen.

Grundsätzlich könnte das Filtermaterial aus zwei

- 4 -

gleichen Lagen des offenporigen Schaumstoffes, evtl.
auch aus mehr als zwei Lagen, bestehen. Für bestimmte
Anwendungsgebiete und unter gewissen Voraussetzungen
kann es zweckmäßig sein, wenn wenigstens zwei der
Schaumstofflagen unterschiedliche Porengröße aufweisen und/oder unterschiedlich dick sind. Besonders
vorteilhaft ist, vor allem bei Verwendung für Schutzbekleidung, ein Filtermaterial, welches sich dadurch
auszeichnet, daß eine vergleichsweise dünne Schaumstofflage kleiner Porengröße mit einer weiteren,
ihr gegenüber größere Dicke und größere Porengröße
aufweisenden Schaumstofflage verbunden ist. Bei Verbindung einer verhältnismäßig dünnen Schaumstofflage
geringer Porengröße mit einer ihr gegenüber dickeren
Lage mit größeren Poren ergeben sich besondere Vorzüge. Da die Lage mit den kleinen Poren nur relativ
dünn ist, wird die Luftdurchlässigkeit nur wenig beeinträchtigt. Andererseits werden aber in den gegenüber der dickeren Lage geringere Größe aufweisenden
Poren der dünneren Lage die Schadstoffe, die durch
die dickere Lage nicht zurückgehalten wurden, weitgehend festgehalten, so daß ein derart ausgebildetes
Filtermaterial gegenüber den bekannten Filtermaterialien, welche nur eine Schaumstofflage mit einer bestimmten Porengröße besaßen, nur eine bestenfalls
unwesentlich verminderte Luftdurchlässigkeit, jedoch
ein erheblich gesteigertes Rückhaltevermögen aufweist. Für gewisse Anwendungsgebiete kann es auch
günstig sein, mehr als zwei Schaumstofflagen miteinander zu verbinden, wobei dann die Porengröße

- 5 -

von Lage zu Lage zu- bzw. abnimmt. Die Schaumstofflagen mit kleinen Poren haben dabei eine verhältnismäßig große, für eine Anlagerung von Schadstoffen zur Verfügung stehende Oberfläche, ohne daß der Gasdurchtritt allzusehr beeinträchtigt würde.

Zur Verbesserung der Wirksamkeit des Filtermaterials kann dieses in an sich bekannter Weise mit einem Schadstoffe absorbierenden Mittel, vorzugsweise Aktivkohle, ausgerüstet sein. Diese Ausrüstung kann beispielsweise durch Imprägnieren, Tauchen usw. erfolgen. Wegen des Vorhandenseins wenigstens zweier Schaumstofflagen ist es aber besonders vorteilhaft, wenn zwischen wenigstens zwei der Schaumstofflagen zusätzlich kleine Körper des absorbierenden Mittels eingelagert sind. Diese Körper verbessern die Absorptionsfähigkeit erheblich. Gleichzeitig ist durch die Unterbringung zwischen den beiden miteinander verbundenen Schaumstofflagen gewährleistet, daß die Körper ohne Verwendung eines besonderen Bindemittels sicher in dem Filtermaterial gehalten sind. Die Möglichkeit, auf ein Bindemittel zu verzichten, bietet dabei den Vorzug, daß die Wirksamkeit des Schadstoffe absorbierenden Mittels bzw. der entsprechenden Körper nicht vermindert wird, wie dies bisher häufig der Fall war, wenn zur Einlagerung der absorbierenden Mittel, beispielsweise der Aktivkohle, ein besonderes Bindemittel eingesetzt werden mußte.

Für viele Zwecke kann ein Filtermaterial verwendet werden, das nur aus zwei oder mehr Schaumstofflagen

- 6 -

besteht. Es gibt jedoch auch Anwendungsfälle, wo eine besondere Formstabilität bzw. Widerstandsfähigkeit gegen mechanische Einwirkung wünschenswert ist. Für diese Fälle ist zweckmäßig, wenn auf dem Schichtstoff aus den mehreren, miteinander verbundenen Schaumstofflagen wenigstens einseitig eine Bahn eines aus, vorzugsweise textilen, Fäden bestehenden Materials, z.B. Gewebes, Gewirkes, Gestrickes, Fadengeleges oder Vlieses flächig befestigt, vorzugsweise aufbondiert ist. Hier kann die Ausbildung vorteilhafterweise so sein, daß auf eine Seite des Schichtstoffes, nämlich der beispielsweise bei Verarbeitung zu einer Schutzbekleidung innenliegenden Seite, Charmeuse, auf die andere ein öl- und wasserabweisender Stoff guter Abriebfestigkeit bondiert ist.

Wenn der Schichtstoff aus den mehreren Schaumstofflagen mit einer Bahn eines aus, vorzugsweise textilen, Fäden bestehenden Materials versehen ist, besteht außerdem die Möglichkeit, zwischen dem Schichtstoff und der Bahn des aus Fäden bestehenden Materials zusätzlich kleine Körper eines absorbierenden Mittels einzulagern, um hierdurch die Absorptionsfähigkeit des Filtermaterials für Schadstoffe weiter zu verbessern. Die Körper können neben bereits vorhandenen Absorptionsmitteln eingelagert werden oder alleine die entsprechende Aufgabe übernehmen. Die Körper werden durch die beiden Schichten, zwischen denen sie eingelagert sind, so festgehalten, daß auf die Verwendung besonderer Bindemittel verzichtet werden

- 7 -

kann.

Es liegt im Rahmen der Erfindung, daß das aus, vorzugsweise textilen, Fäden bestehende Material, mit dem der Schichtstoff an einer Seite versehen ist, flammhemmend oder wärmedämmend ausgerüstet, z.B. mit Aluminium bedampft ist.

Weitere Merkmale, Einzelheiten und Vorteile der Erfindung ergeben sich aus der folgenden Beschreibung bevorzugter Ausführungsbeispiele anhand der Zeichnung.

Es zeigen:

Figur 1 einen Teilschnitt durch ein lediglich aus zwei Schaumstofflagen bestehendes Filtermaterial;

Figur 2 einen entsprechenden Teilschnitt durch ein Material, das außerdem einseitig mit einer Textillage versehen ist und zusätzliche Absorber-Körper aufweist, und

Figur 3 einen Teilschnitt durch ein drittes Material, welches sich von dem der Fig. im wesentlichen dadurch unterscheidet, daß zusätzlich auch die andere Seite des Schichtstoffes mit einer Decklage, beispielsweise aus Textilmaterial, versehen ist.

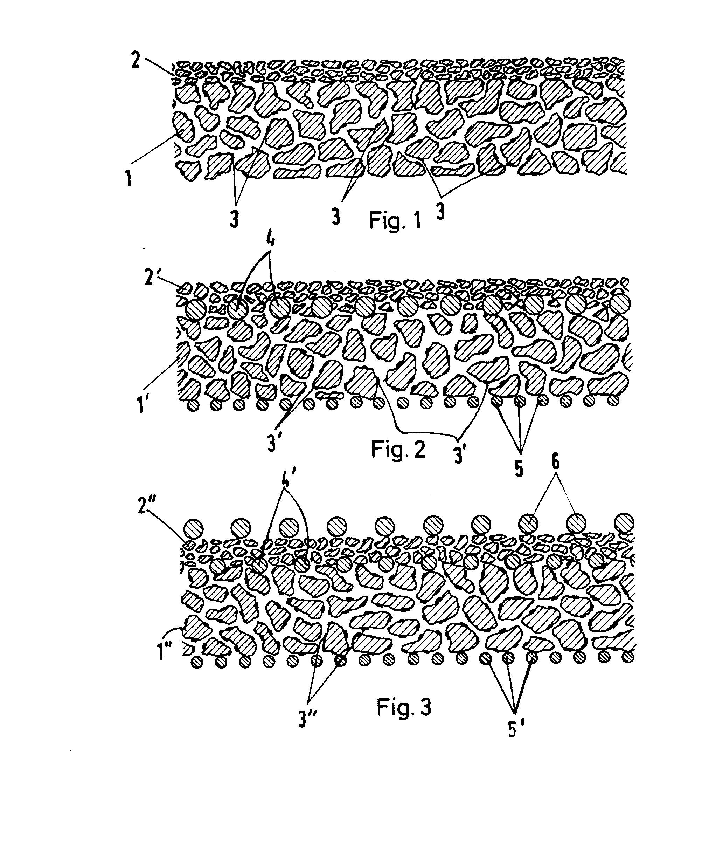

Das Filtermaterial gemäß Fig. 1 umfaßt eine erste, offenporige Schaumstofflage 1, von beispielsweise etwa 2 mm Dicke. Auf diese Lage ist eine zweite, verhältnismäßig dünne Schaumstofflage 2 flächig aufgebracht. Die Schaumstofflage 2 kann beispielsweise eine Dicke von maximal 0,5 mm besitzen. Aus der Zeichnung ist deutlich ersichtlich, daß die Größe der Poren bei der ersten Schaumstofflage 1 größer ist als die der zweiten Schaumstofflage 2.

Die Verbindung der beiden Schaumstofflagen 1 und 2 kann auf unterschiedliche Weise, beispielsweise mittels eines Klebers, erfolgen. Besonders günstig ist es jedoch, wenn die Lagen 1 und 2 zusammenbondiert sind, d.h. derart miteinander verbunden werden, daß die einander benachbarten Oberflächen der Schaumstofflagen 1 und 2 angeschmolzen und, solange die Oberflächen noch schmelzflüssig sind, die Schaumstofflagen 1 und 2 aufeinandergedrückt werden. Dabei ist es möglich, die beiden Schaumstofflagen 1, 2 direkt miteinander zu verbinden. Bisweilen wird allerdings so vorgegangen, daß zum Bondieren eine besondere, in der Zeichnung nicht dargestellte, sehr dünne Folie entsprechend günstiger Eigenschaften verwendet wird. Bei einem derartigen Bondieren wird ein zweifacher Flammprozeß zum Anschmelzen der Oberflächen der Schaumstofflage 1 und der nicht gezeigten dünnen Folie durchgeführt.

Das Filtermaterial gemäß Fig. 1 ist, um die Aufnahme von Giftstoffen, die in den Poren nicht haften würden, zu verbessern, mit einem diese absorbierenden Mittel, beispielsweise Aktivkohle, ausgerüstet.
Es sei beispielsweise angenommen, daß Aktivkohle-
Körper 3 an den Zellwänden der dickeren Schaumstoff-
Lage 1, beispielsweise mittels eines geeigneten
Bindemittels, haften.

Das Filtermaterial gemäß Fig. 2 stimmt mit dem der
Fig. 1 insoweit überein, daß es ebenfalls aus zwei
Schaumstofflagen besteht, nämlich einer dickeren
Schaumstofflage 1' mit verhältnismäßig großen Poren
und einer im Vergleich hierzu relativ dünnen Schaumstofflage 2', deren Porengröße auch geringer ist als
die der Schaumstofflage 1'. Im Rahmen des Bondiervorganges der Schaumstofflagen 1' und 2' sind bei
dem Filtermaterial gemäß Fig. 2 in den Grenzbereich
zwischen der Lage 1' und der Lage 2' zusätzliche
Absorber-Körper 4 eingelagert worden. Dies kann beispielsweise dadurch erfolgen, daß die zusätzlichen
Absorberkörper 4, beispielsweise Aktivkohle-Kugeln,
auf die eine der Schaumstoff-Lagen 1', 2' währenddes
Flammvorganges aufgestreut und anschließend die
andere Schaumstofflage aufgepreßt wird.

Weiterhin ist auf die in Fig. 2 untere Seite des
Filtermaterials ein textiles Material 5 aus Fäden,
beispielsweise Charmeuse, aufgebracht, vorzugsweise
ebenfalls aufbondiert. Zur Festlegung des textilen
Materials 5 dient im Rahmen des Bondiervorganges
vorteilhafterweise eine besondere, sehr dünne
Schaumstoff-Folie. Die Anbringung eines solchen Materials 5 hat den Vorzug, daß die Stabilität des
Filtermaterials der Fig. 2 gegenüber dem der Fig. 1
gesteigert werden kann. Auch das Filtermaterial der
Fig. 2 kann mit einem Schadstoffe absorbierenden
Mittel, beispielsweise in Form der Aktivkohle-Körnchen 3' ausgerüstet sein.

Das Filtermaterial gemäß Fig. 3 weist wie das der Fig.
2 zwei Lagen 1" und 2" eines entsprechenden Schaumstoffes auf, wobei die Lagen 1" und 2" wiederum
unterschiedliche Porosität und Dicke aufweisen.
Außerdem sind zwischen den Lagen 1" und 2" zusätzliche Absorberkörper 4' eingelagert, beispielsweise
im Zusammenhang mit dem Zusammenbondieren der Lagen
1" und 2". Das Filtermaterial gemäß Fig. 3 ist auch
mit einem Schadstoffe absorbierenden Mittel, z.B.
Aktivkohle-Körnchen 3", ausgerüstet. Schließlich
ist die untere bzw. beim fertigen Erzeugnis die
innere Seite mit einem aus Fäden bestehenden textilen Material, z.B. Charmeuse 5', versehen.

Ergänzend zu dem Filtermaterial der Fig. 2 ist nun
bei dem Material der Fig. 3 an der Oberseite eine
weitere Bahn 6, beispielsweise ein Gewebe, vorgesehen,
von dem nur einige wenige Fäden gezeigt sind. Dieses
Gewebe 6 sollte, falls das Filtermaterial zu einem
Schutzanzug verarbeitet wird, öl- und wasserabstoßend
ausgerüstet sein. Weiterhin wäre denkbar, es flammhemmend oder hitzereflektierend, beispielsweise durch
Bedampfen mit Aluminium, auszurüsten. Auch ein Material
mit Mineral- oder Metallfasern könnte für entsprechende

- 11 -

Zwecke eingesetzt werden.

Das Filtermaterial nach Fig. 3 läßt sich an sich direkt für ein Bekleidungsstück verarbeiten, da es innenseitig mit einer textilen Bahn 5', die als Futter dienen kann, ausgerüstet ist, während außenseitig ein als Obermaterial eines entsprechenden Anzuges geeigneter Stoff 6 vorhanden ist, so daß das Filtermaterial nach Fig. 3 einerseits ausreichende Abriebfestigkeit aufweist, andererseits sich aber wegen des Vorhandenseins des Futters 5' auch angenehm trägt.

Es ist leicht einzusehen, daß der Grundgedanke der Erfindung, nämlich die Verbindung zweier Schaumstoff-Lagen bei einem Filtermaterial, gegenüber den erläuterten Beispielen in vielfacher Hinsicht geändert werden kann. Insbesondere wäre natürlich auch eine Ausführungsform denkbar, bei der nicht nur zwei sondern drei Schaumstoff-Lagen vorhanden sind. Weiterhin kann die Befestigung der beiden Schaumstoff-Lagen aneinander nicht nur durch Bondieren, sondern z.B. auch mittels eines geeigneten Klebers erfolgen, wobei unter Umständen es ausreichend wäre, wenn nur bereichsweise eine Verklebung erfolgt.

Die Auswahl der geeigneten Schaumstoff einschließlich der Bestimmung der Dicke und Porengröße richtet sich nach dem jeweiligen Anwendungsgebiet. Der Fachmann ist hierzu ohne weiteres in der Lage, wenn ihm bekannt ist, welche Anforderungen das Filtermaterial erfüllen soll.

0024289

- 1 -

Patentansprüche

1. Mehrlagiges Filtermaterial, welches wenigstens
eine Lage eines offenporigen Schaumstoffes aufweist,
dadurch gekennzeichnet,
daß die eine Lage (1, 1', 1") des Schaumstoffes
mit einer mit der einen Lage fest verbundenen
weiteren Lage (2, 2', 2") eines offenporigen
Schaumstoffes zumindest einseitig abgedeckt ist.

2. Filtermaterial nach Anspruch 1, dadurch gekennzeichnet,
daß die Schaumstoff-Lagen (1, 2; 1', 2'; 1", 2")
zusammenbondiert sind.

3. Filtermaterial nach Anspruch 1 oder 2, dadurch
gekennzeichnet,
daß wenigstens zwei der Schaumstoff-Lagen (1, 1',
1"; 2, 2', 2") unterschiedliche Porengröße aufweisen.

4. Filtermaterial nach einem der Ansprüche 1 bis 3, dadurch gekennzeichnet, daß wenigstens zwei der Schaumstoff-Lagen (1, 1', 1"; 2, 2', 2") unterschiedlich dick sind.

5. Filtermaterial nach Anspruch 3 und 4, dadurch gekennzeichnet, daß eine vergleichsweise dünne Schaumstoff-Lage (2, 2', 2") kleiner Porengröße mit einer weiteren, ihr gegenüber größere Dicke und größere Porengröße aufweisenden Schaumstoff-Lage (1, 1', 1") verbunden ist.

6. Filtermaterial nach einem der vorhergehenden Ansprüche, dadurch gekennzeichnet, daß es mit einem Schadstoffe absorbierenden Mittel (3, 3', 3"), vorzugsweise Aktivkohle, ausgerüstet ist.

7. Filtermaterial nach Anspruch 6, dadurch gekennzeichnet, daß zwischen wenigstens zwei der Schaumstoff-Lagen (1', 1", 2', 2") zusätzliche kleine Körper (4, 4') des absorbierenden Mittels eingelagert sind.

8. Filtermaterial nach einem der vorhergehenden Ansprüche, dadurch gekennzeichnet, daß auf dem Schichtstoff aus den mehreren, miteinander verbundenen Schaumstofflagen (1, 2; 1', 2'; 1", 2") wenigstens einseitig eine Bahn

- 3 -

(5, 5', 6) eines aus vorzugsweise textilen Fäden bestehenden Materials flächig befestigt, vorzugsweise aufbondiert ist.

9. Filtermaterial nach Anspruch 8, dadurch gekennzeichnet,
daß auf eine Seite des Schichtstoffes (1", 2") Charmeuse (5'), auf die andere ein öl- und wasserabweisender Stoff (6) guter Abriebfestigkeit bondiert ist.

10. Filtermaterial nach Anspruch 8 oder 9, dadurch gekennzeichnet,
daß zwischen den Schichtstoff (1, 2; 1', 2'; 1", 2") und die Bahn (5, 5', 6) des aus, vorzugsweise textilen, Fäden bestehenden Materials zusätzlich kleine Körper eines absorbierenden Mittels eingelagert sind.

Fig. 1

Fig. 2

Fig. 3

# EUROPÄISCHER RECHERCHENBERICHT

EP 80 10 3749.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE – U – 7 012 486 (C. RIPKEN) <br> * Anspruch 1 * <br> -- | 8 |
| | DE – U – 7 021 841 (C. RIPKEN) <br> * Ansprüche 6, 16 * <br> -- | 1,3,8 |
| | DE – U – 7 219 802 (J.C. BINZER) <br> * Ansprüche 2, 8 * <br> -- | 2,8 |
| | DE – A1 – 2 537 104 ( GAF CORP.) <br> * Anspruch 1 * <br> -- | 4 |
| | DE – A1 – 2 645 589 (SCOTT PAPER) <br> * Anspruch 1 * <br> -- | 1,3 |
| | US – A – 3 616 162 (CIE DE SAINT GOBAIN) <br> * Fig. 3 * <br> -- | 4 |
| D | DE – B1 – 2 804 154 (H. v. BLÜCHER et al.) <br> * Anspruch 1 * <br> -- | 6 |
| A | DE – C – 708 008 (H. RUDOLPH) <br> * vollständiges Dokument * <br> -- | |
| A | DE – A – 1 461 479 (E. SCACCOLA) <br> * vollständiges Dokument * <br> ---- | |

**KLASSIFIKATION DER ANMELDUNG (Int.Cl.3)**

B 01 D   39/16
//B 32 B   5/18

**RECHERCHIERTE SACHGEBIETE (Int. Cl.3)**

B 01 D   39/14
B 01 D   39/16
B 32 B   5/14
B 32 B   5/18

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 13-11-1980 | KÜHN |

EPA form 1503.1   06.78